(19) Europäisches Patentamt
European Patent Office
Office européen des brevets

(11) Veröffentlichungsnummer: **0 075 769**
**B1**

(12) # EUROPÄISCHE PATENTSCHRIFT

(45) Veröffentlichungstag der Patentschrift: **26.02.86**

(51) Int. Cl.⁴: **C 08 G 75/02**

(21) Anmeldenummer: **82108389.6**

(22) Anmeldetag: **11.09.82**

(54) **Verfahren zur Herstellung von Polyarylensulfiden.**

(30) Priorität: **25.09.81 DE 3138178**
**19.02.82 DE 3205996**

(43) Veröffentlichungstag der Anmeldung:
**06.04.83 Patentblatt 83/14**

(45) Bekanntmachung des Hinweises auf die Patenterteilung:
**26.02.86 Patentblatt 86/9**

(84) Benannte Vertragsstaaten:
**DE FR GB IT**

(56) Entgegenhaltungen:
**EP - A - 0 023 314**
**DE - A - 2 817 731**
**US - A - 3 919 177**

(73) Patentinhaber: **BAYER AG, Konzernverwaltung RP Patentabteilung, D-5090 Leverkusen 1 Bayerwerk (DE)**

(72) Erfinder: **Idel, Karsten, Dr., Scheibler Strasse 81, D-4150 Krefeld (DE)**
Erfinder: **Ostlinning, Edgar, Dr., Rembrandtstrasse 37, D-4000 Düsseldorf (DE)**
Erfinder: **Freitag, Dieter, Dr., Hasenheide 10, D-4150 Krefeld (DE)**
Erfinder: **Bottenbruch, Ludwig, Dr., Wöhlerstrasse 5, D-4150 Krefeld (DE)**

**EP 0 075 769 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Polyarylensulfide sind bekannt (vgl. US-PS 2 538 941 und 2 513 188). Sie können aus den entsprechenden Halogenaromaten und Alkali- oder Erdalkalisulfiden hergestellt werden. Man kann in Masse arbeiten oder polare Lösungsmittel mitverwenden. So werden nach dem in US-PS 3 354 129 beschriebenen Verfah-ren monomere und polymere Sulfide erhalten durch Umsetzung von mindestens einer cyclischen Verbindung, die eine Doppelbindung zwischen benachbarten Ringatomen enthält, und die wenigstens durch ein Halogenatom substituiert ist, mit einem Alkalisulfid in einem polaren Solvens wie Amid, Lactam oder Sulfon bei erhöhter Temperatur. Polyhalogenverbindungen können als Verzweiger eingesetzt werden.

In DE-AS 2 453 749 werden Carboxylate als Reaktionsbeschleuniger und neben Alkalisulfiden auch organische Thioverbindungen als Schwefelspender beansprucht.

Gemäß DE-OS 2 623 363 bzw. US-PS 4 038 261 werden als Katalysatoren für die Herstellung von Arylensulfidpolymeren Lithiumchlorid oder Lithiumcarboxylat eingesetzt.

N-Methylpyrrolidon und Alkalihydroxide vervollständigen das Katalysatorsystem.

Gemäß US-PS 4 038 259 werden Alkalicarbonate in Kombination mit Alkalicarboxylaten und gemäß US-PS 4 038 263 Lithiumhalogenide als Katalysatoren für die Polyphenylensulfidherstellung eingesetzt.

Gemäß DE-OS 2 623 362 bzw. US-PS 4 038 262 werden Lithiumhalogenide oder Alkalicarboxylate als Katalysatoren für die Herstellung von Arylensulfidpolymeren verwendet. N-Methylpyrrolidon und Alkalihydroxide vervollständigen das Katalysatorsystem.

Gemäß DE-OS 2 623 333 bzw. US-PS 4 064 114 wird Lithiumacetat als Katalysator für die Herstellung von Arylensulfidpolymeren verwendet. N-Alkylpyrrolidone und gegebenenfalls als Basen Alkalihydroxide und/oder Alkalicarbonate vervollständigen das Katalysatorsystem.

In US-PS 4 038 260 werden Alkalimetallsulfonate und in US-PS 4 039 518 Lithiumcarbonat und Lithiumborat beansprucht.

Polyarylensulfide mit verringertem Schmelzfließverhalten können mit Trialkaliphosphat-Katalysatoren (DE-OS 2 930 710) oder Alkaliphosphonat-Katalysatoren (DE-OS 2 930 797) erhalten werden.

In DE-OS 2 623 333 wird die üblicherweise vor der Umsetzung mit Dihalogenaromaten in dem polaren Lösungsmittel durchgeführte Entwässerung in zwei Stufen vorgenommen.

Zuerst wird das Hydrat des Katalysators Lithiumacetat entwässert und in einem zweiten Schritt anschließend das Natriumsulfidhydrat.

Im allgemeinen werden die p-Polyphenylensulfide noch einem an die Reaktion anschließenden Härtungs- oder Curingschritt unterworfen (z.B. US-PS 3 717 620, US-PS 3 524 835, US-PS 3 839 301), bei dem über Kettenverlängerungs- und Verzweigungsreaktionen die Eigenschaften verbessert werden sollen.

Ohne diesen Härtungsschritt besitzen die p-Polyphenylensulfide im allgemeinen eine nur niedrige Schmelzviskosität, die eine thermoplastische Verarbeitung nicht zuläßt.

Gemäß US-PS 3 919 177 soll unter ausgewählten Bedingungen mit Hilfe des Katalysators Lithiumcarboxylat erreicht werden, daß das erzeugte p-Polyphenylensulfid ohne vorherige Härtung zu Fasern schmelzversponnen werden kann. In der US-PS 4 116 947 bzw. DE-OS 2 817 731 soll durch eine besondere Menge Restwasser und gegebenenfalls in

Anwesenheit von Carboxylaten erreicht werden, daß die resultierenden p-Polyphenylensulfide ohne Härtungsschritt zu Fasern versponnen und extrudiert, sowie formgepreßt werden können.

Der Erfindung liegt die Erkenntnis zugrunde, daß verzweigte Polyarylensulfide mit hoher Schmelzviskosität und hohem Molekulargewicht erhalten werden, wenn man in an sich bekannter Weise Di- und Polyhalogenbenzole und Alkalisulfide in bestimmten polaren Lösungsmitteln kondensiert und dabei in zusätzlicher Anwesenheit von 0,02 bis 0,3 Mol (bezogen auf 1 Mol Alkalisulfid) eines Alkalisulfits und/oder Erdalkalisulfits arbeitet. Die erhaltenen Polyarylensulfide können ohne härtende Nachbehandlung formgepreßt, extrudiert und zu Fasern versponnen werden. Sie haben im Vergleich zu den bisher marktgängigen Polyarylensulfiden wesentlich verbesserte mechanische Eigenschaften.

Gegenstand der Erfindung ist ein Verfahren zur Herstellung von verzweigten, hochmolekularen Polyarylensulfiden mit hoher Schmelzviskosität, das dadurch gekennzeichnet ist, daß man

a) Dihalogenbenzole, von denen 50 bis 100 Mol-% der Formel (I)

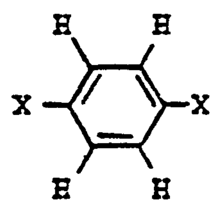

(I)

entsprechen, und 0 bis 50 Mol-% der Formel (II),

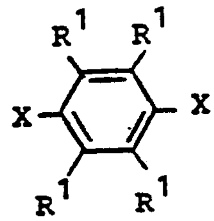

(II)

wobei

X Fluor, Chlor, Brom und Iod, vorzugsweise Chlor und Brom, ist und

$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$ -Alkaryl oder $C_7$ $C_{24}$-Aralkyl sein kann, und/oder zwei Reste $R^1$ zu einem aromatischen oder heterocyclischen Ring verknüpft sein können, und immer mindestens ein Rest $R^1$ verschieden von Wasserstoff ist, und

b) 0,1 bis 2,4 Mol-%, bevorzugt 0,4 bis 2,0 Mol-%, bezogen auf die Dihalogenbenzole, eines Polyhalogenaromaten der Formel (III),

$ArX_n$ (III)

wobei

Ar ein aromatischer oder heterocyclischer Rest mit 6 - 24 C-Atomen und mindestens 3 freien Wertigkeiten ist,

X die gleiche Bedeutung wie in Formel (I) und (II) hat und,

n 3 oder 4 ist, und

c) ein Alkalisulfid, bevorzugt Natrium- oder Kaliumsulfid oder deren Mischung, bevorzugt in Form der Hydrate oder wäßriger Mischungen, gegebenenfalls zusammen mit Alkalihydroxiden, in einem

d) polaren Lösungsmittel, bevorzugt einem Amid oder Lactam, besonders bevorzugt einem am Stickstoff vollständig alkylierten Amid oder Lactam, wobei das molare Verhältnis von a) zu c) im Bereich von 0,85: 1 bis 1,15; 1, bevorzugt 0,95: 1 bis 1,05: 1 und von c) zu d) im Bereich von 1: 2 bis 1: 15 liegt, umsetzt, wobei eine Polykondensationszeit von bis zu 10 Stunden, vorzugsweise von 0,2 bis 5 Stunden, und eine Polykondensationstemperatur von 160 bis 300° C, bevorzugt zwischen 200 bis 285° C, eingehalten wird, und wobei die Umsetzung in Anwesenheit von 2 bis 30 Mol %, (bezogen auf Alkalisulfid) eines Alkali- und/oder Erdalkalisulfits der Formeln (IV) bzw. (V),

$M_2SO_3$ (IV), $M'SO_3$ (V)

in denen M Alkalimetalle, insbesondere Lithium, Natrium und Kalium und M' Erdalkalimetalle, insbesondere Magnesium und Calcium bedeutet, durchgeführt wird.

Bevorzugt werden Alkalisulfite und besonders bevorzugt Natrium- und Kaliumsulfit verwendet. Die erfindungsgemässen Sulfite werden gewöhnlich in Form ihrer Hydrate bzw. ihrer wäßrigen Lösungen eingesetzt, können aber auch wasserfrei, wenn sie in dieser Form verfügbar sind, Anwendung finden.

Die Alkalisulfide, bevorzugt Kalium- und Natriumsulfid, werden ebenfalls vorzugsweise in Form ihrer Hydrate oder wäßrigen Mischungen eingesetzt. Sie können aber auch aus Schwefelwasserstoff und den entsprechenden Alkalihydroxiden oder aus den Alkalihydrogensulfiden und den entsprechenden Alkalihydroxiden gemäß einer stöchiometrischen Umsetzung in der Reaktionslösung direkt hergestellt werden. Es können auch Mischungen der Alkalisulfide eingesetzt werden.

Je nach Anteil von Alkalihydrogensulfid in der Reaktionslösung, das als Verunreinigung im Alkalisulfid enthalten ist oder während des Reaktionsprozesses entsteht, wird zusätzlich stöchiometrisch Alkalihydroxid zur Regenerierung von Alkalisulfid zudosiert. Gegebenenfalls können auch anstelle der Alkalihydroxide solche Verbindungen zugegeben werden, die unter den Reaktionsbedingungen Alkalihydroxide abspalten bzw. bilden.

Als Alkalisulfide werden z.B. Lithium-, Natrium-, Kaliumund Rubidiumsulfid, bevorzugt Natrium- und Kaliumsulfid, eingesetzt. Es können auch Mischungen der Alkalisulfide benutzt werden.

Als Alkalihydroxide kommen z.B. Lithiumhydroxid, Natriumhydroxid und Kaliumhydroxid sowie deren Mischungen in Frage.

Die Alkalisulfide und/oder die Alkalisulfite bzw. Erdalkalisulfite können in einem oder mehreren Schritten, beispielsweise durch Abdestillieren des Wassers aus der Reaktionslösung, entwässert werden. Die partielle Entwässerung sollte vor der Zugabe der p-Dihalogenverbindungen der Formeln (I) und (II) abgeschlossen sein. Das Alkalisulfid und Alkalisulfit bzw. Erdalkalisulfit können zusammen oder getrennt partiell entwässert werden.

Das Zusammengeben der Reaktanten kann im Prinzip in beliebiger Form erfolgen. Die p-Dihalogenaromaten der Formeln (I) und (II) und die Polyhalogenaromaten der Formel (III) können zusammen oder getrennt, kontinuierlich, in Portionen oder direkt auf einmal zu dem Alkalisulfid, dem Lösungsmittel oder einem Teil davon und den Alkalisulfiten bzw. Erdalkalisulfiten der Formeln (IV) und (V) gegeben werden.

Es können aber auch das Alkalisulfid zusammen mit dem Lösungsmittel oder einem Teil davon und den Sulfiten der Formeln (IV) und (V) zu den Verbindungen der Formeln (I) und (II) und den Polyhalogenaromaten (III) gegeben werden. Es können auch alle Reaktanten direkt zusammengegeben werden. Jede andere Kombination der Reaktanten ist ebenfalls möglich.

Beispiele für die erfindungsgemäß einzusetzenden p-Dihalogenaromaten der Formel (I) sind: p-Difluorbenzol, p-Dichlorbenzol, p-Dibrombenzol, p-Dijodbenzol, 1-Fluor-4-chlorbenzol, 1-Fluor-4-brombenzol, 1-Chlor-4-brombenzol, 1-Chlor-4-jodbenzol und 1-Brom-4-jodbenzol. Sie sind allein oder im Gemisch miteinander

verwendbar. Bevorzugte p-Dihalogenaromaten sind p-Dichlorbenzol und p-Dibrombenzol.

Beispiele für die erfindungsgemäß einzusetzenden p-Dihalogenaromaten der Formel (II) sind: 2,5-Dichlortoluol, 2,5-Dichlorxylol, 1-Ethyl-2,5-dichlorbenzol, 1-Ethyl-2,5-Dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol. Sie sind allein oder im Gemisch miteinander einsetzbar.

Beispiele für die erfindungsgemäß einzusetzenden Polyhalogenaromaten der Formel (III) sind:

1,2,3-Trichlorbenzol, 1,2,4-Trichlorbenzol, 1,2,4-Tri-brombenzol, 1,2,4-Trijodbenzol, 1,3,5-Trichlor-2,4,6-trimethylbenzol, 1,2,3-Trichlornaphthalin, 1,2,4-Tri-chlornaphthalin, 1,2,6-Trichlornaphthalin, 2,3,4-Tri-chlortoluol, 2,4,6-Trichlortoluol, 1,2,3,4-Tetrachlor-naphthalin, 1,2,4,5-Tetrachlorbenzol, 2,2'-4,4'-Tetra-chlorbiphenyl, 1,3,5-Trichlor-triazin.

Generell kann jedes polare Lösungsmittel für die Reaktion eingesetzt werden, das eine ausreichende Löslichkeit der organischen und anorganischen Reaktanten unter den Reaktionsbedingungen gewährleistet. Bevorzugt werden jedoch Amide und Lactame und besonders bevorzugt N-alkylierte Amide und Lactame verwendet.

Lactame im Sinne der vorliegenden Erfindung sind solche von Aminosäuren mit 3 bis 5 C-Atomen, die gegebenenfalls Substituenten am Kohlenstoffgerüst tragen können, die unter Reaktionsbedingungen inert sind, wie z.B. einen Alkylrest mit 1 bis 5 C-Atomen.

N-Alkyllactame im Sinne der vorliegenden Erfindung sind wie die erfindungsgemäßen Lactame definiert, tragen jedoch zusätzlich am Stickstoffatom einen Alkylrest mit 1 bis 6 C-Atomen.

Beispielsweise kommen als Lösungsmittel in Frage:

N,N'-Dimethylacetamid, N,N'-Diethylacetamid, N,N'-Dipropylacetamid, N,N'-Dimethylbenzoesäureamid, Caprolactam, N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrro-lidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isopropyl-2-piperidon, N-Isobutyl-2-piperidon, N-Me-thyl-6-methyl-2-piperidon, N-Methyl-3-ethyl-2-piperidon, N-Methyl-2-oxo-hexamethylenimin und N-Ethyl-2-oxo-hexa-methylenimin.

Es können auch Mischungen der vorstehenden Lösungsmittel gewählt werden.

Die Kondensationstemperatur ist in der Regel 160 bis 300°C, bevorzugt 200 bis 285°C. Die Reaktionszeit kann bis zu 10 Stunden betragen, liegt jedoch vorzugsweise zwischen 0,2 und 5 Stunden. Eine stufenweise Steigerung der Reaktionstemperatur während dieser Zeit ist von Vorteil. Da die Reaktionstemperatur im allgemeinen höher liegt als der Siedepunkt der polaren Lösungsmittel, wird automatisch unter Anwendung von Überdruck gearbeitet.

Das Dihalogenbenzol und das Alkalisulfid werden möglichst äquimolar umgesetzt. Das Molverhältnis Dihalogenbenzol/ Alkalisulfid liegt demgemäß bevorzugt im Bereich von 0,95:1 bis 1,05:1. Es kann jedoch auf den Bereich 0,85:1 bis 1,15:1 erweitert werden.

Die erfindungsgemäß einzusetzenden Polyhalogenaromaten der Formel (III) können bis zu einer Menge von mehreren Mol-%, bezogen auf den Anteil Dihalogenbenzol, je nach den Versuchsbedingungen zusammen mit den p-Dihalogenbenzolen oder getrennt zugesetzt werden, in der Regel wird jedoch ein Anteil von 0,1 bis 2,4 Mol-%., vorzugsweise 0,4 bis 2,0 Mol-%, bezogen auf den Anteil Dihalogenbenzol, ausreichend sein.

Die Menge Lösungsmittel kann in einem weiten Bereich gewählt werden, liegt im allgemeinen jedoch bei 2 bis 15 Mol pro Mol Alkalisulfid.

Die Aufarbeitung des Reaktionsgemisches kann in mannigfaltiger Weise erfolgen.

Das Polyarylensulfid kann direkt aus der Reaktionslösung oder erst nach Zugabe, z.B. von Wasser, nach üblicher Verfahrensweise abgetrennt werden, beispielsweise durch Filtration oder durch Zentrifugieren.

Nach der Filtration schließt sich im allgemeinen zur Entfernung von anorganischen Bestandteilen, die den Polymeren anhaften können, wie z.B. Reste Alkalisulfide und Alkalichloride, eine Wäsche mit Wasser an.

Eine Wäsche oder Extraktion mit anderen Waschflüssigkeiten, die auch zusätzlich oder nachträglich zu dieser Wäsche durchgeführt werden kann, ist natürlich auch möglich.

Das Polymere kann auch durch Abziehen des Lösungsmittels aus dem Reaktionsraum und eine anschließende Wäsche, wie oben beschrieben, gewonnen werden.

Die erfindungsgemäßen Polyarylensulfide können auch mit anderen Polymeren, mit Pigmenten und Füllstoffen, wie beispielsweise Graphit, Metallpulver, Glaspulver, Quarzmehl oder Glasfasern gemischt oder mit den für Polyarylensulfide üblichen Additiven, wie beispielsweise üblichen Stabilisatoren oder Entformungsmitteln, versetzt werden.

Im allgemeinen wird das Schmelzfließverhalten von Polyarylensulfiden nach ASTM 1238-70 bei 316°C unter Verwendung eines 5-kg-Gewichtes gemessen und in g/lO min angegeben.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta m$ der Polymerschmelze (in Pa.s) bei 306°C in Abhängigkeit von der Schubspannung $\tau$ (in Pa) mit Hilfe des Instron-Rotationsviskosimeters bestimmt.

Man kann auf diese Weise die Schmelzviskosität in einem sehr weiten Bereich von $10^{-1}$ bis $10^7$ Pa.s genau bestimmen. In dem Instron-Rheometer wird das Polymer zwischen einer festen Platte und einem drehbaren Kegel

aufgeschmolzen und das Drehmoment des Kegels bestimmt. Aus dem Drehmoment, der Winkelgeschwindigkeit und den apparativen Daten kann die Schmelzviskosität in Abhängigkeit von der Schubspannung errechnet werden. Verwendet wurde das Rheometer Modell 3250 der Fa. Instron; Durchmesser des Kegels und der Platte 2 cm.

Angegeben wird die Schmelzviskosität, die bei einer Schubspanung von $\tau = 10^2$ Pa gemessen wird.

Die erfindungsgemäßen p-Polyarylensulfide besitzen direkt nach der Isolierung aus dem Reaktionsgemisch im allgemeinen Schmelzviskositäten von 0,5 x $10^3$ bis 5 x $10^5$ Pa.s und höher, vorzugsweise aber von 1,5 x $10^3$ bis $10^4$ Pa.s. Sie können direkt durch Extrusion, Extrusionsblasen, Spritzgießen oder sonst übliche Verarbeitungstechniken zu Folien, Formkörpern oder Fasern verarbeitet werden, welche in üblicher Weise Verwendung finden als Automobilteile, Armaturen, Elektroteile, z.B. Schalter, elektronische Tafeln, chemikalienresistente Teile und Apparate wie Pumpengehäuse und Pumpenflügelräder, Ätzbadschalen, Dichtungsringe, Teile von Büromaschinen und Fernmeldeeinrichtungen, sowie Haushaltsgeräte, Ventile, Kugellagerteile, etc.

**Beispiel 1**

Dieses Beispiel beschreibt zum Vergleich die Herstellung von Polyphenylensulfid gemäß US-PS 3 354 129.

In einem mit Rührer ausgerüsteten Autoklaven wurden 129 g Natriumsulfid-tri-hydrat (entsprechend 1 Mol $Na_2S$) und 300 g N-Methyl-2-pyrrolidon zusammengegeben. Das Gemisch wurde mit Stickstoff gespült und langsam bis auf 202°C erwärmt. Dabei destillierten insgesamt 19 ml Wasser ab. Der Ansatz wurde anschließend auf ca. 160°C heruntergekühlt und 147 g p-Dichlorbenzol (= 1 Mol) in ca. 50 g N-Methyl-2-pyrrolidon hinzugefügt. Man erwärmt das Reaktionsgemisch unter dem Stickstoffvordruck von 2,5 bar in 30 Minuten auf 245°C, wobei der Druck auf 10 bar ansteigt, und hält diese Temperatur 3 Stunden. Nach Abkühlen auf Raumtemperatur wird ein grauer Feststoff isoliert, der anschließend einer sorgfältigen Wasserwäsche zur Entfernung der anorganischen Beimengen unterworfen wird.

Man trocknet bei 80°C im Vakuum und erhält 100,3 g (93 %) Poly-p-phenylensulfid mit folgenden Kenndaten: Schmelzviskosität $\eta m = 4{,}5$ Pa.s (bei $\tau = 10^2$ Pa). Eine thermoplastische Verarbeitung ist ohne Härtung nicht möglich.

**Beispiel 2**

191, 6 g Natriumsulfid-Hydrat (1,455 Mol) und 18,9 g Natriumsulfit-Hydrat (Na $SO_3 x 7 H_2O$) (5 Mol %, bezogen auf die Mole Natriumsulfid) und entsprechende Mengen Natriumhydroxid zur Neutralisation von im Ansatz enthaltenen Natriumhydrogensulfid werden in 500 g N-Methylpyrrolidon vorgelegt. Durch langsames Aufheizen bis auf 175°C werden 35,0 ml eines Destillats, das zum größten Teil Wasser enthält, erhalten.

Anschließend werden 220,5 g p-Dichlorbenzol (1,50 Mol) und 2,72 g (0,015 Mol) 1,2,4-Trichlorbenzol in 70 ml N-Methylpyrrolidon zugesetzt, und nach Verschließen des Autoklaven wird das Reaktionsgemisch in 90 Min. von 200°C auf 270°C gebracht und 120 Min. dabei gehalten.

Nach Reaktionsende läßt man auf 150°C abkühlen, entspannt und entnimmt das Reaktionsgemisch. Das entstandene p-Polyphenylensulfid wird abgetrennt und sorgfältig mit Wasser von anhaftenden Salzen befreit. Das p-Polyphenylensulfid wird nach Trocknen als grau-weißer Feststoff isoliert. Schmelzviskosität $\eta$ m = 1450 Pa.s (bei $\tau = 10^2$ Pa).

**Beispiel 3**

Wie Beispiel 2, jedoch mit 10 Mol % Natriumsulfit-Hydrat. Schmelzviskosität $\eta$ m = 1800 Pa.s (bei $\tau = 10^2$ Pa).

**Beispiel 4**

Wie Beispiel 2' jedoch mit 3'54 g (0,0195 Mol) 1,2,4-Tri-chlorbenzol. Schmelzviskosität $\eta$ rn = 2200 Pa.s (bei $\tau = 10^2$ Pa)

**Beispiel 5**

Wie Beispiel 2, jedoch mit 20 Mol % Natriumsulfit-Hydrat. Schmelzviskosität η m = 2350 Pa.s (bei τ = 102 Pa)

**Beispiel 6**

Wie Beispiel 2, jedoch mit 28,3 g Kaliumsulfit-Hydrat $K_2SO_3x2H_2O$ (10 Mol %, bezogen auf die Mole Natriumsulfid). Schmelzviskosität η m = 1900 Pa.s (bei τ = $10^2$ Pa).

Zum Vergleich liegt die Schmelzviskosität eines handelsüblichen, thermisch unbehandelten p-Polyphenylensulfids der Phillips Petroleum Com., dem Ryton VI®, bei τ m = 3,5 Pa.s (bei η = $10^2$ Pa) und damit deutlich niedriger als die Schmelzviskosität der in den Beispielen beschriebenen erfindungsgemäßen p-Polyphenylensulfide.

Thermoplastisch verarbeitbares, handelsübliches p-Polyphenylensulfid Ryton P4® der Phillips Petroleum Comp. wird vermutlich durch eine zusätzliche thermische Nachbehandlung gewonnen. Trotz dieser zusätzlichen Nachbehandlung ist das handelsübliche, thermoplastisch verarbeitbare p-Polyphenylensulfid dem erfindungsgemäßen, direkt in einem Schritt gewonnenen p-Polyphenylensulfid in den mechanischen Eigenschaften unterlegen (s.Tabelle 1).

**Tabelle 1:**

| Eigenschaft | Maßeinheit | Prüfvorschrift | Handelsprodukt thermoplastisch verarbeitbares PPS | PPS aus Beispiel 4 und | Beispiel 6 |
|---|---|---|---|---|---|
| Reißfestigkeit | MPa | DIN 53 455 | 43,06 | 44,2 | 45,7 |
| Reißdehnung | % | DIN 53 455 | 0,9 | 8,3 | 10,9 |
| Zug-E-Modul | MPa | DIN 53 455 | 4400 | 3800 | 3300 |
| Biegefestigkeit | MPa | DIN 53 452 | 77,8 | 108 | 128 |
| Biege-E-Modul | MPa | DIN 53 452 | 3820 | 3970 | 4220 |
| Kugeldruckhärte | MPa | DIN 53 456 | 64,7 | 110,5 | 160,2 |
| Schlagzähigkeit | $kJ/m^2$ | DIN 53 453 | 3,5 | 16,7 | 22,8 |
| Kerbschlagzähigkeit | $kJ/m^2$ | DIN 53 453 | 0,9 | 1,2 | 1,8 |

**Patentansprüche:**

1. Verfahren zur Herstellung von hochmolekularen verzweigten Polyarylensulfiden, dadurch gekennzeichnet, daß man

a) Dihalogenbenzole, von denen 50 bis 100 Mol-% der Formel I

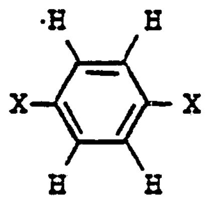

(I)

entsprechen, und
0 bis 50 Mol-% der Formel II

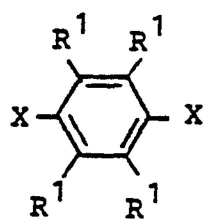

(II)

wobei
X Fluor, Chlor, Brom oder Iod und
$R^1$ gleich oder verschieden ist und Wasserstoff, $C_1$-$C_{20}$-Alkyl, $C_5$-$C_{20}$-Cycloalkyl, $C_6$-$C_{24}$-Aryl, $C_7$-$C_{24}$-Alkaryl oder $C_7$-$C_{24}$-Aralkyl sein kann, und/oder zwei Reste $R^1$ zu einem aromatischen oder heterocyclischen Ring verknüpft sein können, und immer mindestens ein Rest $R^1$ verschieden von Wasserstoff ist, und

b) 0,1 bis 2,4 Mol-%, bezogen auf die Dihalogenbenzole, eines Polyhalogenaromaten der Formel III,

$$Ar\,X_n \qquad (III)$$

wobei
Ar ein aromatischer oder heterocyclischer Rest mit 6 - 24 C-Atomen und mindestens 3 freien Wertigkeiten ist,
X die gleiche Bedeutung wie in Formel I und II hat, und
n = 3 oder 4 ist, und

c) ein Alkalisulfid in einem

d) polaren Lösungsmittel umsetzt,

wobei das molare Verhältnis von a) zu c) im Bereich von 0,85:1 bis 1,15:1 und c) zu d) im Bereich von 1:2 bis 1:15 liegt, eine Polykondensationszeit von bis zu 10 Std. und eine Polykondensationstemperatur von 160 bis 300°C eingehalten wird, und wobei die Umsetzung in Anwesenheit von 2 bis 30 Mol-%, bezogen auf Alkalisulfid, eines Alkali- und/oder Erdalkalisulfits durchgeführt wird.

2. Verfahren gemäß Anspruch 1, dadurch gekennzeichnet, daß als Komponente a) p-Dichlorbenzol oder p-Dibrombenzol eingesetzt wird.

3. Verfahren gemäß Anspruch 1, dadurch gekennzeichnet, daß 0,4 bis 2,0 Mol-%, bezogen auf Dihalogenbenzol, eines Polyhalogenaromaten der Formel III eingesetzt wird.

4. Verfahren gemäß Anspruch 1, dadurch gekennzeichnet, daß 2 bis 30 Mol-%, bezogen auf Alkalisulfid, Natriumoder Kaliumsulfit eingesetzt werden.

5. Verfahren gemäß Anspruch 1, dadurch gekennzeichnet, daß als LÖsungsmittel ein am Stickstoff vollständig alkyliertes Amid und/oder Lactam eingesetzt werden.

**Claims**

1. Process for the preparation of high molecular weight branched polyarylene sulphides, characterised in that

a) dihalogenobenzenes, of which 50 to 100 mole % correspond to the formula I

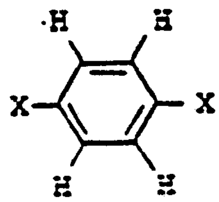

(I)

and 0 to 50 mole % correspond to the formula II

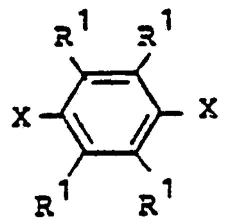

(II)

wherein

X is fluorine, chlorine, bromine or iodine, and $R^1$ is identical or different and can be hydrogen, $C_1$-$C_{20}$-alkyl, $C_5$-$C_{20}$-cycloalkyl, $C_6$-$C_{24}$-aryl, $C_7$-$C_{24}$-alkaryl or $C_7$-$C_{24}$-aralkyl, and/or two radicals $R^1$ can be linked to form an aromatic or heterocyclic ring, and always at least one radical $R^1$ is different from hydrogen, and

b) 0.1 to 2.4 mole %, relative to the dihalogenobenzenes, of a polyhalogenoaromatic of the formula III,

$$Ar\, X_n \qquad (III)$$

wherein

Ar is an aromatic or heterocyclic radical having 6 - 24 C atoms and at least 3 free valences, X has the same meaning as in formula I and II, and

n = 3 or 4,

and

c) an alkali metal sulphide are reacted in

d) a polar solvent, the molar ratio of a) to c) being in the range from 0.85:1 to 1.15:1, and c) to d) in the range from 1:2 to 1:15, a polycondensation time of up to 10 hours and a polycondensation temperature from 160 to 300°C being maintained, and the reaction being carried out in the presence of 2 to 30 mole %, relative to alkali metal sulphide, of an alkali metal sulphite and/or alkaline earth metal sulphite.

2. Process according to Claim 1, characterised in that p-dichlorobenzene or p-dibromobenzene is employed as component a).

3. Process according to Claim 1, characterised in that 0.4 to 2.0 mole %, relative to dihalogenobenzene, of a polyhalogenoaromatic of the formula III is employed.

4. Process according to Claim 1, characterised in that 2 to 30 mole %, relative to alkali metal sulphide, of sodium sulphite or potassium sulphite are employed.

5. Process according to Claim 1, characterised in that a lactam and/or amide ompletely alkylated at the nitrogen are employed as solvents.

**Revendications**

1. Procédé pour la fabrication de sulfures de polyaryléne de haut poids moléculai re, rami f iés, de vi scosité à l'état fondu élevée, caractérisé en ce que l'on fait réagir:

a) des dihalogénobenzénes, dont 50 à 100 mol % correspondent à la formule (I)

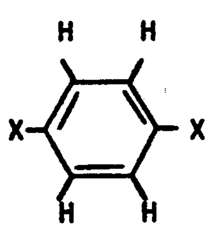

(I)

et 0 à 50 mol % à la formule (II),

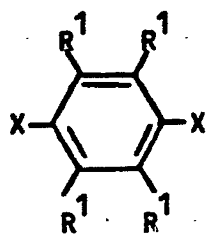

(II)

dans lesquelles

X représente le f luor, le chlore, le brome ou l'iode et les restes $R^1$ sont identiques ou différents et peuvent être l'hydrogene ou un groupe alkyle en $C_1$-$C_{20}$, cycloalkyle en $C_5$-$C_{20}$, aryle en $C_6$-$C_{24}$, alkylaryle en $C_7$-$C_{24}$ ou arylalkyle en $C_7$-$C_{24}$ et/ou deux restes R peuvent être reliés pour former un noyau aromatique ou hétérocyclique, et au moins un reste $R^1$ est toujours différent de l'hydrogène, et

b) 0,1 à 2,4 mol %, par rapport aux dihalogénobenzenes, d'un carbure aromatique polyhalogéné de formule (III)

$$ArX_n \qquad (III)$$

dans laquelle

Ar est un reste aromatique ou héterocyclique en $C_6$-$C_{24}$ et ayant au moins 3 liaisons libres,

X a la même signification que dans les formules (I) et (II) et n est égal à 3 ou 4, et

c) un sulfure alcalin, dans

d) un solvant polai re, le rapport molaire de a) à c) étant de 0,85:1 à 1,15:1 et le rapport de c) à d) de 1:2 à 1:15,

en ce que l'on observe une durée de polycondensation allant jusqu'à 10 h, et une température de polycondensation de 160°C à 300°C, et

en ce que l'on met en oeuvre la réaction en présence de 2 à 30 mo1% (par rapport au sulfure alcalin) d'un sulfite alcalin et/ou d'un sulfite alcalino-terreux.

2. Procédé selon la revendication 1, caractérisé en ce que l'on utilise comme composant a) le p-dichlorobenzéne ou le p-dibromobenzéne.

3. Procédé selon la revendication 1, caractérisé en ce que l'on utilise 0,4 à 2,0 mol % d'un carbure aromatique polyhalogéné de formule (III) par rapport au dihalogénobenzéne.

4. Procédé selon la revendication 1, caractérisé en ce que l'on utilise 2 à 30 mol % de sulfite de sodium ou de sulfite de potassium, par rapport au sulfure alcalin.

5. Procédé selon la revendication 1, caractérisé en ce que l'on utilise comme solvant un amide et/ou un lactame totalement alkyle à l'azote.